# EUROPEAN PATENT APPLICATION

(11) **EP 4 711 947 A1**
(43) Date of publication of application: **18.03.2026**
(21) Application number: 25201531.8
(22) Date of filing: 11.09.2025
(51) Int. Cl.: G06F 16/25

(54) **DATA INGESTION IN CLOUD-BASED DATA WAREHOUSING ENVIRONMENT**

(30) Priority: 17.09.2024 US 202463695774 P; 02.12.2024 US 202463727154 P; 18.08.2025 US 202519302299
(71) Applicant: SAP SE, 69190 Walldorf (DE)
(72) Inventor: SCHOENAU, Peter, 69190 Walldorf (DE); MAIER, Florian, 69190 Walldorf (DE); RANNACHER, Jens, 69190 Walldorf (DE); GOMEZ, Silvio Normey, 69190 Walldorf (DE); FLORES, Roberto Raguze, 69190 Walldorf (DE)
(74) Representative: Müller-Boré & Partner Patentanwälte PartG mbB

(57) **Abstract**

A landing zone is established in an open table format object storage. More specifically, the landing zone is implemented as a local ingestion table file. This represents a special subtype of the local data file that is used in the inbound layer when ingesting data from an external system. This local ingestion table file is further subdivided into an active data portion and an inbound buffer. When data is written from the external system, it is first placed in the inbound buffer. This data is then merged into the active data, after processing and postprocessing. The result of these postprocessing operations is then stored in the active data portion of the local ingestion table file.

## Description

### CROSS-RELATION TO RELATED APPLICATIONS

This application claims priority to U.S. Provisional Application No. 63/695,774, filed September 17, 2024, entitled "DATA PLATFORM," and U.S. Provisional Application No. 63/727,154, filed December 2, 2024, entitled "EMBEDDED DATA LAKE CAPABILITIES," both hereby incorporated herein by reference in its entirety.

### TECHNICAL FIELD

The present disclosure relates to data warehousing environments, specifically to data ingestions in cloud-based data warehousing environments.

### BACKGROUND

A data warehousing environment is a specialized system designed to store, manage, and analyze large volumes of structured and, in some cases, semi-structured data. It serves as a central repository where data from various sources is consolidated, transformed, and made available for querying and reporting. Data warehousing environments often used for supporting business intelligence (BI), analytics, and decision-making processes within organizations.

### BRIEF DESCRIPTION OF THE DRAWINGS

Figure 1 is a block diagram illustrating a system, in accordance with an example embodiment.
Figure 2 is a block diagram illustrating an architecture for a direct write to active data, in accordance with an example embodiment.
Figure 3 is a block diagram illustrating an architecture for writing to the inbound buffer first, in accordance with an example embodiment.
Figure 4 illustrates a method for storing data in a cloud-based data warehousing environment, in accordance with an example embodiment.
Figure 5 shows a block diagram showing one example of a software architecture for a computing device.
Figure 6 shows a block diagram of a machine in the example form of a computer system within which instructions may be executed for causing the machine to perform any one or more of the methodologies discussed herein.

### DETAILED DESCRIPTION

One example of a data warehousing environment is a cloud-based data management solution to help organizations create a unified and intelligent data layer across their entire data landscape. It serves as a foundation for a "data fabric," which is a way to seamlessly connect, manage, and make sense of data from various sources-whether those sources are internal systems, third-party platforms, or on-premise databases.

One of the capabilities of a data warehousing environment is its ability to provide direct access to distributed data while preserving its original business meaning. Rather than simply moving raw data around, it maintains important elements like business logic, semantics, and relationships. This is particularly valuable for organizations that want to ensure consistency and governance across departments, enabling them to analyze and act on data in context.

The platform supports both data replication and federated access, allowing companies to choose whether to move the data or access it in real time from where it resides. It also features a user-friendly interface for data modeling and transformation, making it accessible to both technical users and business analysts. This helps bridge the gap between IT and business teams, making it easier to collaborate on data initiatives.

Security, governance, and regulatory compliance are built into the platform. Users can set controls on how data is accessed and shared, ensuring sensitive information remains protected while still enabling secure collaboration internally or with external partners.

One technical issue that arises with a data warehousing environment derives from where it stores data. Data from the various different sources is ingested and stored in an in-memory database. An in-memory database (also known as an in-memory database management system) is a type of database management system that primarily relies on main memory for computer data storage. It is contrasted with database management systems that employ a disk storage mechanism. In-memory databases are traditionally faster than disk storage databases because disk access is slower than memory access. One example in-memory database is the HANA^{®} database from SAP SE, of Walldorf, Germany.

While storing data in an in-memory database results in very quick data access operations, maintaining large amounts of data in an in-memory database can be difficult to manage and expensive. Other types of long-term storage provide better scalability and are less expensive, such as using hyperscalers. Hyperscalers are large-scale cloud service providers that offer highly scalable and distributed computing, storage, and networking infrastructure. These companies operate massive data centers and provide cloud-based services to businesses and individuals, enabling them to access computing resources on demand. Hyperscalers are known for their ability to scale resources dynamically, allowing users to handle workloads of varying sizes efficiently and cost-effectively.

The term "hyperscaler" is derived from the concept of "hyperscale computing," which refers to the ability to scale computing infrastructure seamlessly to meet the demands of large-scale applications, such as big data analytics, artificial intelligence, machine learning, and enterprise-level workloads. Hyperscalers achieve this by leveraging advanced technologies, automation, and economies of scale to deliver reliable and flexible cloud services.

Examples of hyperscalers include Amazon Web Services (AWS), Microsoft Azure, Google Cloud Platform (GCP), and Alibaba Cloud. These providers offer a wide range of services, including virtual machines, object store, databases, networking, analytics, and machine learning tools. Hyperscalers also provide global infrastructure, with data centers located in multiple regions, ensuring high availability and low latency for their customers.

In an example embodiment, a data warehousing environment, or a similar architecture, is extended to permit data storage in either an in-memory database or a Lakehouse architecture, which leverages one or more hyperscalars for the underlying storage. More specifically, a single artifact is defined in a data warehousing environment that stores data in either the in-memory database or the Lakehouse architecture, and does so in a storage-agnostic manner.

The Lakehouse architecture includes mechanisms for schema enforcement and evolution, enabling users to define and modify data schemas as needed while maintaining data quality and consistency. It supports both business intelligence and machine learning workloads, allowing organizations to perform a wide range of data analytics tasks on a single platform. The Lakehouse architecture separates storage from computing resources, allowing for independent scaling of each component, which provides flexibility in resource allocation and cost management.

Lakehouses often utilize open data formats, such as Apache Parquet, Delta Lake, or Apache Iceberg, to ensure compatibility with various data processing engines and tools. They also support real-time data ingestion and processing, enabling timely insights and decision-making. By integrating the capabilities of data lakes and data warehouses, a lakehouse architecture offers a comprehensive solution for managing large volumes of diverse data, supporting both batch and real-time processing, and enabling advanced analytics and machine learning applications.

An open table format is a data storage format designed to facilitate efficient data management and processing in distributed environments, particularly in data lake and lakehouse architectures. These formats are characterized by their ability to support multi-engine read and write operations, allowing different data processing engines to access and manipulate the data concurrently. Open table formats are typically used to store large datasets on object store systems, providing a flexible and scalable solution for data analytics.

SAP HANA Cloud from SAP, SE of Walldorf, Germany, is a cloud-based data platform that provides advanced data management and analytics capabilities. It is designed to handle large volumes of data in real-time, offering features such as in-memory computing, data integration, and processing for both transactional and analytical workloads.

Data lake files are digital files stored within a data lake, which is a centralized storage designed to store vast amounts of raw data in its native format. These files can include structured data, such as tables; semi-structured data, like JSON or XML files; and unstructured data, such as text documents, images, and videos. Data lakes are designed to accommodate diverse data types and formats, allowing organizations to store data without the need for upfront structuring. This flexibility enables data scientists and analysts to perform various types of data processing and analysis, including big data analytics, machine learning, and real-time data processing, directly on the stored files, which may be stored in their native format without any added structure.

Hana Data Lake (HDL) Files from SAP, SE of Walldorf, Germany offer file and object store for structured, semi-structured, and unstructured data in HANA Cloud. HDL Files provide a single, uniform API that is independent of the infrastructure choice made by customers when provisioning the HANA Cloud service. This system is available to customers as a feature set within the HANA Cloud data lake service.

HDL Files are implemented by SAP's Storage Gateway. The Storage Gateway is deployed in all HDL clusters of HANA Cloud. Tables can be represented and stored in data lakes, such as HDL Files, using structured file formats. Open Table Format (OTF) is a category of structured file formats to represent tables, which provide guarantees to users, such as ACID transactions. Given the increasing interest of HDL File users in OTF tables, HDL Files are being enhanced to provide capabilities to manage OTF tables on top of their existing APIs to manage generic objects.

APIs may be introduced to allow users to organize OTF tables in an HDL Files catalog. They also provide client libraries for integration with Apache Spark. Apache Spark is an open-source, distributed computing system designed for processing and analyzing large-scale data efficiently. It provides a unified framework for handling a wide range of data processing tasks, including batch processing, real-time streaming, machine learning, graph processing, and interactive querying.

At its core, Spark is built on a distributed computing architecture that allows it to process data across multiple nodes in a cluster in parallel. It achieves high performance by leveraging in-memory computing, which minimizes the need to read and write data to disk during processing. This approach significantly speeds up data processing tasks compared to traditional disk-based systems like Hadoop MapReduce.

In the context of the a data warehousing environment, Spark is used as a compute layer for advanced data processing and transformation tasks. It integrates seamlessly with HANA Data Lake Files (HDL Files) to enable complex workflows, such as data transformations, aggregations, and machine learning, on large datasets stored in the object store. Spark's ability to handle both structured and unstructured data makes it a versatile tool for modern data management and analytics.

Additionally, HDL Files is enhanced to support Delta Sharing, an open protocol for secure sharing of Delta tables. The idea behind Delta Sharing is that it allows one party-the data provider-to share access to specific datasets stored in cloud storage without actually moving or duplicating the data. This is done through a Delta Sharing Server, which acts as a secure gateway, managing who can access which data and ensuring that all permissions and authentication are enforced.

When another organization-the recipient-wants to access this data, they can use a wide range of tools to read it directly from the cloud. Because the data is accessed in place using secure, time-limited URLs, there is no need to download or copy files. This setup keeps data fresh and consistent, reduces data transfer costs, and ensures a high level of control over what is being shared.

Delta Sharing involves the creation and management of Delta shares. Delta shares are collections of objects, such as tables and table partitions, that are to be shared with additional recipients at different organizations.

In an example embodiment, the HDL Files (or similar) functionality is integrated with the a data warehousing environment (or similar) functionality to provide a mechanism for users to elect whether to store data in the in-memory database or in an object store of a hyperscaler. This is all performed in a seamless manner without the need to change user-facing processes, through the introduction of a storage-agnostic storage artifact, such as a table.

Another aspect of a Lakehouse architecture is a large, scalable, inexpensive object store layer, which serves as an inbound, history-preserving, and fine-granularity storage. It also provides or enables tools to perform a wide variety of processes on top of the data to transform it into higher-quality datasets.

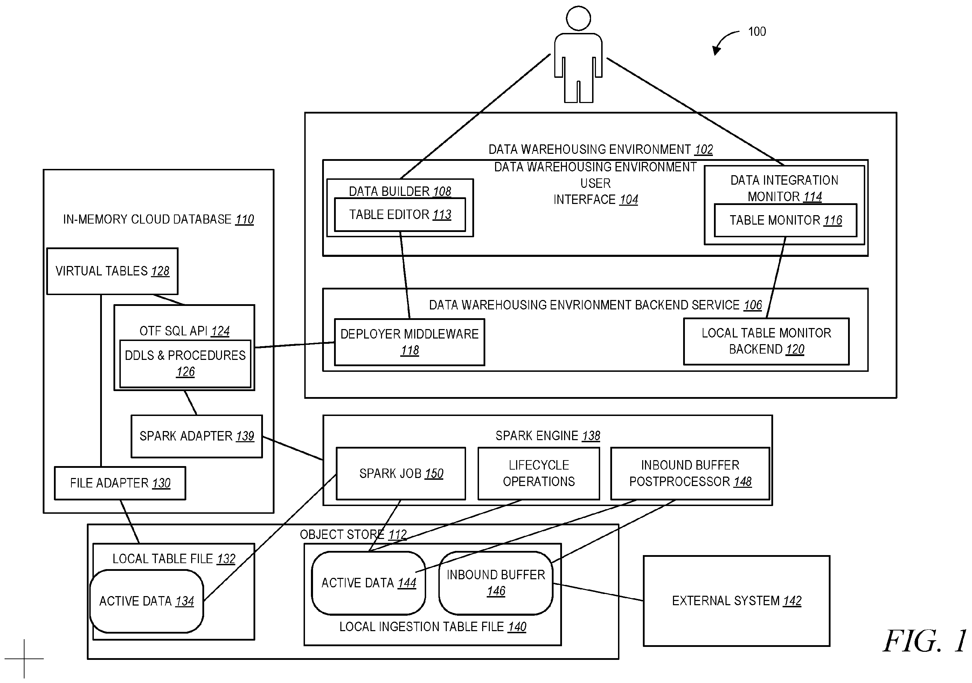

Figure 1 is a block diagram illustrating a system 100, in accordance with an example embodiment. The data warehousing environment 102 comprises a data warehousing environment user interface 104 and a a data warehousing environment backend service 106. The a data warehousing environment user interface 104 comprises a data builder 108. The data builder 108 is designed to help users model, transform, and prepare data for analytics and reporting. It provides an intuitive interface that allows users to create and manage datasets, data models, define relationships between datasets, and perform data transformations. By offering both graphical and scripting-based approaches, the data builder 108 bridges the gap between technical users, such as data engineers, and business users, such as analysts.

The tool enables users to design data models that define how data is structured and related, supporting schemas optimized for analytics. It also allows for the transformation of raw data into meaningful datasets by applying business logic, performing calculations, and cleaning or enriching data. These transformations can be carried out using either graphical tools or scripting languages like SQL, making the tool accessible to a wide range of users.

The data builder 108 integrates seamlessly with various data sources, including cloud platforms and on-premise databases. It supports the creation of virtual tables and views, enabling users to access and work with remote data without physically moving it. Additionally, it works with both in-memory cloud databases 110, such as HANA, and object stores 112, like HANA Data Lake Files, providing flexibility and cost efficiency in data management.

For datasets that support change data capture, the data builder 108 incorporates incremental updates, allowing users to track and manage changes to data over time. This feature is particularly valuable for maintaining up-to-date analytics in dynamic environments. The tool also supports collaborative workflows, enabling multiple users to work on data models and transformations while ensuring consistency and reusability across projects.

The data builder 108 may comprise a table editor 113. This is a tool that allows users to create, modify, and manage tables as part of their data modeling and transformation workflows. It provides an interface for defining the structure and properties of tables, enabling users to configure how data is stored, accessed, and processed.

Using the table editor 113, users can define the schema of a table, including its columns, data types, and primary keys. It allows for the specification of additional table properties, such as partitioning configurations, which can optimize query performance and data organization. The tool also supports the creation of tables that leverage different storage types, such as in-memory storage or object store, providing flexibility in how data is managed.

Additionally, the table editor 113 provides options for managing table lifecycle operations, such as deploying, modifying, or deleting tables. It ensures that changes to table structures are implemented in a controlled and consistent manner, even when data is already stored in the table. For example, it allows users to add new columns to a table with existing data while enforcing restrictions on operations that could compromise data integrity, such as dropping primary key columns.

The data warehousing environment user interface 104 further comprises a data integration monitor 114. The data integration monitor 114 is a tool designed to provide visibility and control over data integration processes. It enables users to monitor, manage, and troubleshoot data flows and transformations as they occur within the platform. By offering real-time insights into the status and performance of data integration activities, the data integration monitor 114 ensures that users can maintain the reliability and efficiency of their data pipelines.

This tool allows users to track the progress of data replication, transformation, and ingestion workflows. It provides detailed information about the execution of these processes, including their current status, completion times, and any errors or warnings encountered. This visibility helps users identify and resolve issues quickly, minimizing disruptions to data operations.

The Data Integration Monitor also supports the management of scheduled and on-demand data integration tasks. Users can view and control the execution of these tasks, such as starting, stopping, or rescheduling them as needed. This flexibility ensures that data integration processes align with organizational requirements and priorities.

In addition to monitoring individual tasks, the data integration monitor 114 provides aggregated views of data integration activities across the platform. This allows users to analyze trends, identify bottlenecks, and optimize the performance of their data workflows. The tool also integrates with other components of the a data warehousing environment 102, enabling users to drill down into specific data flows or transformations for further analysis.

The data integration monitor 114 comprises a table monitor 116. The table monitor 116 is a specialized tool that provides users with detailed insights into the status and performance of table-related operations. It is designed to help users track, manage, and troubleshoot activities associated with tables, such as data ingestion, replication, and transformation, ensuring that table operations are executed efficiently and reliably.

The table monitor 116 allows users to view the current state of tables, including their data ingestion status, update frequency, and any associated transformation workflows. It provides real-time information about the progress of data being written to or read from tables, enabling users to monitor the flow of data into and out of the system. This is particularly useful for ensuring that data pipelines are functioning as expected and that tables are being populated with accurate and up-to-date information.

In addition to tracking data ingestion, the table monitor 116 provides visibility into table-specific operations, such as merge tasks, optimization processes, and change data capture (CDC) activities. For example, it can display the status of merge tasks that consolidate data from an inbound buffer into a target table or show the results of optimization tasks that improve query performance by compacting small files or reorganizing data partitions.

The tool also highlights any errors or warnings encountered during table operations, allowing users to quickly identify and address issues. For instance, if a data ingestion task fails due to schema mismatches or connectivity problems, the table monitor 116 provides diagnostic information to help users resolve the problem. This ensures that table-related workflows remain consistent and reliable.
The table monitor 116 integrates seamlessly with other components of the Data Integration Monitor, enabling users to drill down into specific table operations or link them to broader data integration workflows. It also supports lifecycle management tasks, such as monitoring the deployment of new tables, tracking schema changes, or managing table deletions. By providing a centralized view of table activities, the table monitor 116 helps users maintain control over their data assets and ensures that tables are functioning as intended within the overall data landscape.

Referring now to the a data warehousing environment backend service 106, this component comprises a deployer middleware 118, which is responsible for orchestrating the deployment and management of data models, transformations, and other artifacts within the a data warehousing environment 102. It acts as an intermediary layer that ensures the seamless execution of deployment tasks, maintaining consistency and reliability across the platform's data management and integration processes.

The deployer middleware 118 facilitates the deployment of data models, such as tables, views, and transformation flows, by translating high-level design specifications into executable instructions for the underlying infrastructure. It ensures that these deployments are carried out in a controlled and consistent manner, adhering to the defined configurations and dependencies. This includes managing the creation, modification, and deletion of database artifacts, such as virtual tables, Delta tables, and associated metadata.

Deployer middleware 118 handles transactional deployment operations. It ensures that deployment tasks are executed atomically, meaning that either all changes are successfully applied, or none are applied in the event of an error. This guarantees the integrity of the deployed artifacts and prevents partial or inconsistent states. For example, when deploying a Local Table File, which means storing the data on a hyperscaler object store, with change data capture (CDC) capabilities, the deployer middleware 118 coordinates the creation of both the virtual table in the in-memory cloud database 110 that provides federated SQL based data access and the delta table in the object store 112, ensuring that all components are properly aligned.

The deployer middleware 118 also manages dependencies between different artifacts, ensuring that deployment sequences are executed in the correct order. For instance, it ensures that a Delta table is created in the object store 112 before its corresponding virtual table is deployed in the in-memory cloud database 110. This dependency management is helpful for maintaining the logical consistency of the data landscape.

In addition to deployment, the deployer middleware 118 supports lifecycle management tasks, such as updating existing artifacts to reflect schema changes or reconfigurations. It enforces rules to ensure that changes are applied safely, such as restricting operations that could compromise data integrity, like dropping primary key columns. The deployer middleware 118 also handles cleanup operations, such as rolling back changes or removing artifacts during undeployment, to maintain a clean and consistent environment.

The a data warehousing environment backend service 106 also comprises a local table monitor backend 120, which provides the backend functionality for the table monitor 116.

The in-memory cloud database 110 is where the database artifacts are stored, but the underlying data related to the database artifacts could be stored in either the in-memory cloud database 110 or the object store 112. More particularly, an Open Table Format Structured Query Language Application Program Interface (OTF SQL API) 124 stores data definition language (DDL) objects and procedures 126 for managing one or more virtual tables 128. The virtual tables 128 represent the database artifacts for data stored in the object store 112. They are stubs that provide federated data access via the in-memory database 110 to data that is stored in a remote location, such as the external system 142.

A file adapter 130 connects the virtual tables 128 to the object store 112, and specifically one virtual table to one object store path in which the active data 134 of a local table file is stored.

Spark engine 138 may be accessed through a spark adapter 139 on the in-memory cloud database 110 and may be managed by the in-memory cloud database 110. Lifecycle management and data processing of the local table file 132 may be orchestrated via Spark engine 138.

With delta tables being built on top of object stores, allowing append-only operations, a modification (such as an update or delete operation) means rewriting all files that contain a record that is to be modified. When delta tables are implemented on top of these object stores, the underlying storage system is designed to support append-only operations. This means that new data can be added (appended) to the storage, but existing data is not modified in place. This may result in there being a significant number of files that need to be entirely read and entirely written after a modification is performed, necessitating significant processing and memory utilization.

Thus, in an example embodiment, a landing zone is established in the local table file 132. More specifically, the landing zone may be implemented as a local ingestion table file 140. This represents a special subtype of the local table file 132 that is only used in the inbound layer when ingesting data from an external system 142. This local ingestion table file 140 is further subdivided into an active data 144 portion and an inbound buffer 146. When data is written from the external system 142, it is first placed in the inbound buffer 146. Only after an explicit processing step is this data merged into the active data 144. More specifically, once it is determined that there is no more data to be added to the inbound buffer 146 (e.g., the ingestion operation is complete), an inbound buffer postprocessor 148 performs one or more modifications on the data, such as deduplication, optimizing, delta merge, etc. The result of these postprocessing operations is then stored in the active data 144 portion of the local ingestion table file 140.

While other processes in the a data warehousing environment 102 are able to read data from the active data 144 portion of the local ingestion table file 140, they are not able to write data to the active data 144 portion of the local ingestion table file 140. This ensures consistency in data to avoid any concurrency locks or the like. If it is desired that write operations be allowed to be performed on the data by these other processes, then a spark job 150 can copy the active data to a separate local data file, such as local table file 132, where an active data 134 copy can be stored.

The inbound buffer 146 may be implemented as plain parquet files, or a (append-only) delta.io table. It will not be cleaned up with typical vacuum or similar operations of the delta table.

The inbound buffer 146 may also contain settings that allow a user to control the behavior to merge the inbound buffer 146 with the active data 144 portion. Users can, for example, define a maximum data latency and/or a maximum size of the inbound buffer 146. If either of these maximums are reached, a merging operation may be performed by the inbound buffer postprocessor 148.

Indeed, the local ingestion table file 140 may contain a number of different configuration properties, besides the options normally provided in a local table file 132. These may include vacuum and optimization settings, statistics (delta, file size, etc.) and the like. These configuration settings may include, for example, inbound buffer 146 merge behavior, thresholds, conditions for immediate merge, lifecycle operation configuration, merge job configuration properties (with options for different settings for having finished initial load/delta), inbound buffer status and monitoring, information about the current size of the inbound buffer 146, status of the last or current merge (e.g., scheduled, active, finished, failed, timestamp started, timestamp finished, runtime, bytes merged, link to job (logs), and update metadata.

It is also possible to hide the local ingestion table file 140 from the public, such that, for example, the external system 142, is not aware of its existence and it is only accessible via a runtime flow that hides the location of the local ingestion table file 140. In contrast, a public-facing API could be provided to allow direct access to the local ingestion table file 140.

The implementation of the Local Ingestion Table File and its associated processes involves several technical and operational challenges. One significant issue is the small file sizes created during data transfer. Replication management services often transfer data in packages with a maximum size of 30MB, but due to compression and low-frequency changes during the delta phase, the files generated in the object store are often much smaller. This results in a large number of small files, especially in scenarios involving real-time replication or frequent inserts. These small files degrade performance during data consumption, as accessing numerous small files increases overhead.

Another challenge arises from small delta intervals. When latency thresholds are set low for the Local Ingestion Table File and modifications primarily involve inserts, many small files are added to the Delta table over time. This leads to performance degradation during data consumption, as numerous small files need to be accessed.

An additional challenge occurs in that the change operations might lead to the need to rewrite a significant number of files, which requires a significant amount of processing power and memory. Irrespective of whether there is one or millions of changes happening in a file, the file need to be read and written again after having modified a single record in it.

Furthermore, regular OPTIMIZE operations are required to compact these files into larger ones to ensure acceptable read performance. Balancing latency and file size is critical to avoid excessive small file creation while maintaining up-to-date data availability.

Aligning RMS delta scheduling with Local Ingestion Table File data latency presents additional difficulties. Customers often want to see changes in data immediately after fetching them from the source. However, merging small inbound buffers into active data immediately after each delta run can lead to performance issues due to the creation of numerous small files. A valid strategy is to accumulate a reasonable amount of data before merging, but this introduces latency. Frequent scheduling of OPTIMIZE and VACUUM actions is necessary to maintain performance, but this adds complexity and cost.

The integration of post-processing and delta-merge steps also poses challenges. Merging the inbound buffer into active data requires rewriting a significant number of files, which can lead to long processing times and high cost. This impacts the overall system performance and increases resource utilization. If post-processing and delta-merge are considered part of the replication process, customers are charged for the additional processing time within data integration hours, leading to higher costs. Proper monitoring and alerting mechanisms are required to track the status of post-processing and delta-merge jobs and notify customers or cloud operations in case of failures.

Schema evolution and ownership constraints further complicate the implementation. A Local Ingestion Table File can only be populated by a single replication flow task. This constraint is necessary to prepare for automatic schema evolution but limits flexibility in data ingestion workflows. Additionally, no other service, such as transformation flows, is allowed to write into a Local Ingestion Table File owned by a replication flow. This ensures data integrity but reduces interoperability.

Challenges also arise during the initial load phase. There is a trade-off between writing directly to active data, which makes data available sooner but creates small files, and writing to the inbound buffer, which delays data visibility but allows for optimized file sizes through post-processing. If data is written directly to active data, an OPTIMIZE operation must be scheduled after the initial load to improve read performance. This adds complexity to the workflow. Concurrency and scheduling introduce further difficulties. The post-processing and delta-merge task has a maximum concurrency of one, meaning only one task can run at a time. This can lead to delays if multiple tasks are queued. The replication process and the post-processing and delta-merge task run independently, which requires careful coordination to ensure data consistency and availability.

Cost and resource allocation are also significant concerns. Post-processing and delta-merge jobs require substantial CPU and memory resources to rewrite files, especially for large datasets. Proper resource allocation is critical to avoid bottlenecks. Customers are charged for data integration hours, which include the time spent on post-processing and delta-merge if it is part of the replication process. This can lead to higher costs for customers.

Monitoring and visualization of the Local Ingestion Table File can also be problematic. The Local Table File monitor should visualize the current state of the inbound buffer, including size, last merge statistics, runtime, and job logs. Real-time updates are useful, but regular crawling may be needed to update size information. An "update now" functionality can be provided for real-time monitoring.

Technical constraints also play a role. The inbound buffer can be in plain Parquet format rather than a Delta table, which can limit certain functionalities. While the Local Ingestion Table File can be an internal construct, exposing it as a public API for broader use cases can trigger security considerations.

Replication modes, such as manual start and scheduled start, have different implications for how data is ingested and processed. Aligning these modes with the Local Ingestion Table File configuration adds complexity to the system design. Real-time replication introduces additional challenges, as high-frequency changes can lead to a high rate of small file creation, requiring frequent optimization and vacuuming to maintain performance.

In summary, the challenges primarily revolve around balancing performance, cost, and data latency while ensuring data integrity and scalability. Addressing these challenges requires careful design of the Local Ingestion Table File architecture, efficient resource allocation, and robust monitoring and alerting mechanisms.

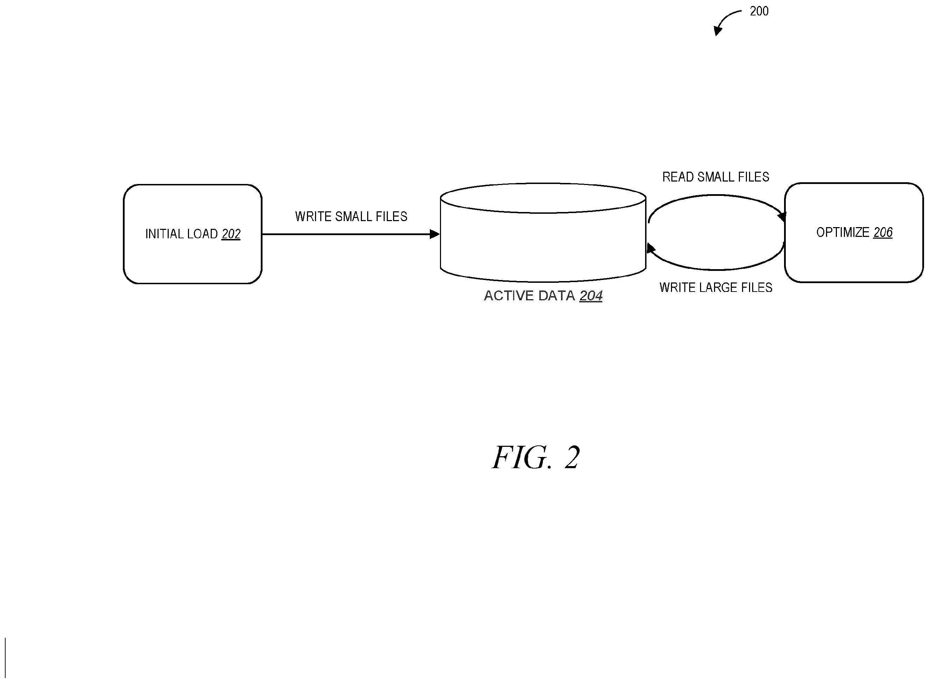

Writing data to the local ingestion table file can be performed in a number of different ways. In a first embodiment, a direct write to the active data may be performed. Figure 2 is a block diagram illustrating an architecture 200 for a direct write to active data 204, in accordance with an example embodiment. Here, an initial load 202 of data may be written directly as small files in the active data 204. During an initial load 202 of data, no updates or deletes need to be performed on the target side, which opens up the possibility to write directly to the active data 204, as the computing power needed to rewrite a large number of files is not required (assuming an empty source and there is no deduplication performed in the writer). This direct writing may take the form of Parquet files and adding them to the Delta.io table. While these files may not have an optimized size for consumption, this can be addressed by executing an optimize operation 206 after the initial load in case customers want to optimize for read performance (either scheduling this step right after the initial load or by making use of the settings to perform this on a regular basis).

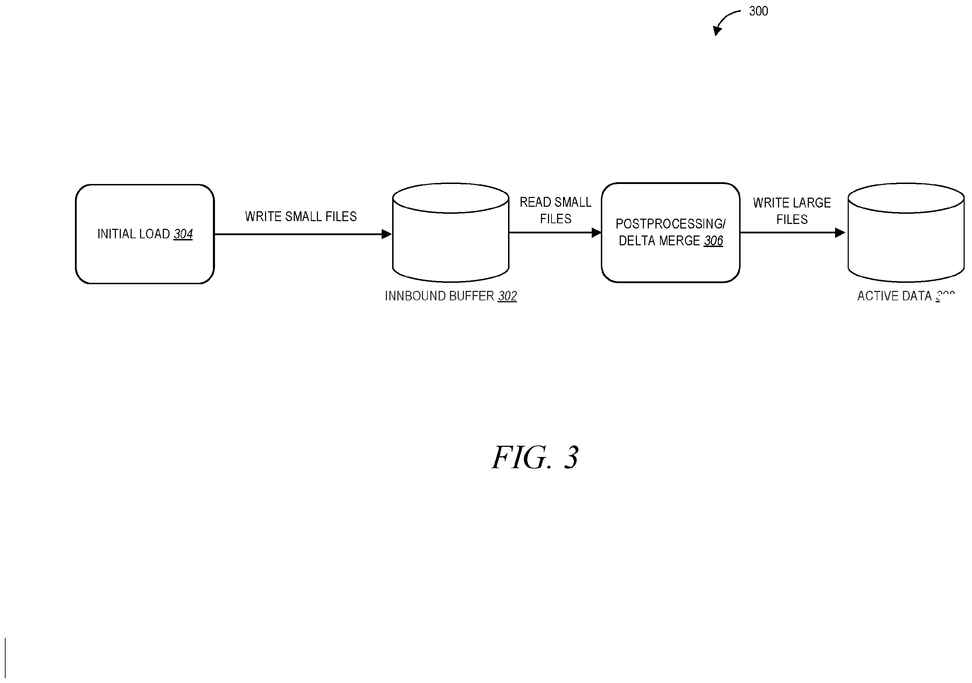

In a second embodiment, the data may be written directly to the inbound buffer during the initial load. Figure 3 is a block diagram illustrating an architecture 300 for writing to the inbound buffer 302 first, in accordance with an example embodiment. Here, the initial load 304 is first written to the inbound buffer as small files. Then post-processing/delta merge 306 (either after the entire data transfer or at just right after the initial load) can move the data from the inbound buffer 302 to the active data 308, directly performing the optimize command and creating reasonable file sizes. With this approach, data may be visible after the inbound buffer post-processing/delta-merge has finished.

The post-processing and delta-merge step is realized as a distinct technical task associated with the Local Ingestion Table File. This step is useful for merging data from the inbound buffer into the active data portion of the Local Ingestion Table File, ensuring optimized file sizes and maintaining data consistency.
The post-processing and delta-merge step may be implemented as an independent task with a maximum concurrency of one. This means that only one post-processing and delta-merge task can run at a time for a given Local Ingestion Table File. The task is created during the deployment of the Local Ingestion Table File and is owned by it. This ensures that the task operates in a controlled manner and avoids conflicts with other processes.

One approach to realizing the post-processing and delta-merge step is to integrate it as part of the replication process. In this approach, the replication process waits for the post-processing and delta-merge step to finish before transitioning to the next state. For example, the replication process would only report the initial load or a delta run as complete after the post-processing and delta-merge task has finished. To implement this, the replication process launches and monitors the execution of the post-processing and delta-merge step. Additional work orders in the records management system framework can be introduced to manage this step. A postprocessing workorder can trigger the post-processing and delta-merge actions after a replication run or phase, such as the initial load. This work order would indicate whether post-processing was required or not. A postprocessing status workorder can also be injected regularly to monitor the status of the post-processing and delta-merge task, ensuring that the replication process can track the progress of the task and determine when it has finished.

While this approach ensures that data is available to the user immediately after the replication process completes, it has a significant downside. The duration of the post-processing and delta-merge step is accounted for within the data integration hours, which increases costs for customers. Moreover, the replication process is delayed while waiting for the post-processing and delta-merge step to finish, which can impact overall system performance.

Another approach is to decouple the post-processing and delta-merge step from the replication process. In this approach, the replication process does not wait for the post-processing and delta-merge task to finish before transitioning to the next state. Instead, the replication process reports the initial load or delta run as complete once data has been written to the inbound buffer. The post-processing and delta-merge task is then scheduled independently by the Local Ingestion Table File backend or as part of a task chain. For example, in a long-running replication task, the replication process triggers the post-processing and delta-merge task after completing the initial load. The post-processing and delta-merge task handles all data written to the inbound buffer up to the start date of the task.

This approach reduces costs for customers, as the post-processing and delta-merge time is not accounted for within the data integration hours. However, data is not immediately available for consumption after the replication process completes. Users must wait for the post-processing and delta-merge task to finish before accessing the data. In cases where the immediate update strategy is used, the replication process attempts to invoke the post-processing and delta-merge task after each successful delta run. If the post-processing and delta-merge task for the initial load or a previous delta run is still running, the new task execution is either canceled or queued, depending on the system configuration.

For scheduled replication tasks, the post-processing and delta-merge step can be realized as a separate task within a task chain. The replication flow is modeled as a task chain, and the post-processing and delta-merge task is added to the chain after the replication flow wrapper task. Alternatively, the records management system can launch the post-processing and delta-merge step and wait for it to finish before moving on to the next replication run. This approach ensures that data is processed and merged before the next replication cycle begins.

The post-processing and delta-merge step is executed as a Spark job. The Spark job reads data from the inbound buffer, performs operations such as deduplication, optimization, and delta merging, and writes the processed data into the active data portion of the Local Ingestion Table File. The task is managed by the Local Ingestion Table File backend, which schedules and monitors the execution of the Spark job. The backend provides real-time updates on the status of the task, including its runtime, result, and statistics. If the task fails, alerting mechanisms notify the customer or cloud operations to address the issue.

In summary, the post-processing and delta-merge step can provide various advantages. It ensures that data is efficiently merged and optimized, while providing flexibility in how it is integrated with the replication process. The choice between coupling or decoupling the step from the replication process depends on the trade-offs between cost, performance, and data availability.

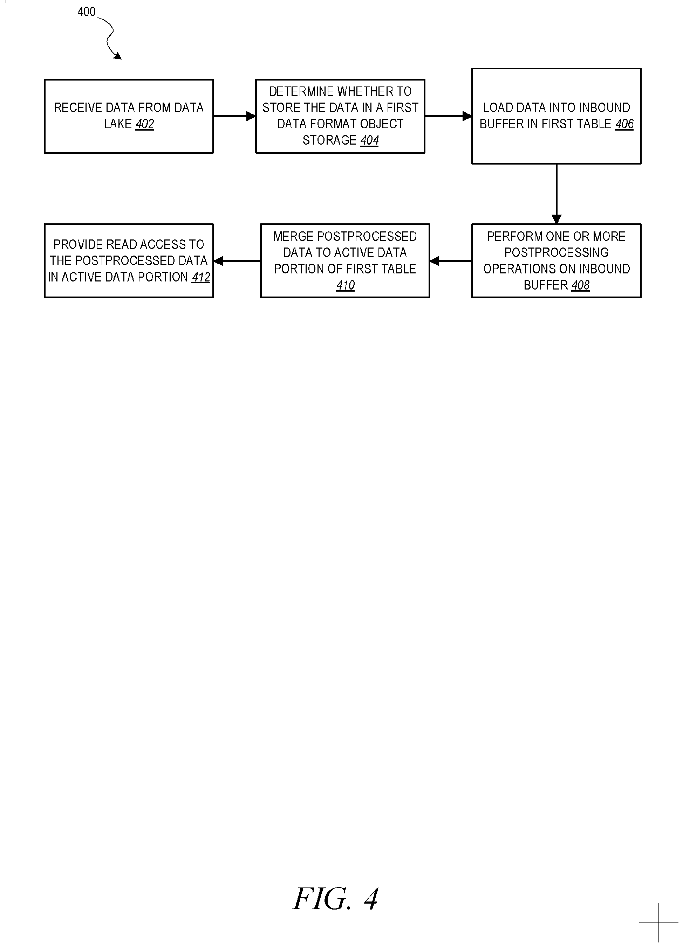

Figure 4 illustrates a method 400 for storing data in a cloud-based data warehousing environment, in accordance with an example embodiment. The method comprises a series of operations denoted by reference numbers, each describing a specific technical function within the data management process.

At operation 402, the method 400 begins by receiving data in a first software framework from a data lake. The data lake stores the data in a raw data storage format, which may include structured, semi-structured, or unstructured data. In some examples, the data may be ingested from external systems or other data sources, and the raw data is transferred into the software framework for further processing.

At operation 404, the method 400 determines whether the received data should be stored in afirst format object storage. If the determination is affirmative, the method proceeds to operation 406. If not, then the method 400 ends as the received data can just be stored normally. In some examples, the first format object storage may be implemented as an open data format object storage.

At operation 406, the data is loaded into an inbound buffer within a first table in the open data format object storage. The inbound buffer serves as a temporary storage location for incoming data before further processing. In some examples, the inbound buffer may be implemented as Parquet files or append-only Delta tables.

At operation 408, one or more postprocessing operations are performed on the data stored in the inbound buffer. These postprocessing operations may include deduplication, optimization, and delta merging. The postprocessing operations ensure that the data is prepared for transfer into the active data portion of the table.

At operation 410, the postprocessed data is merged into the active data portion of the first table. The active data portion represents the finalized state of the data within the table, where it is stored in a format optimized for querying and analytics.

At operation 412, read access to the postprocessed data in the active data portion of the table is provided to one or more processes of the first software framework. Write access to the active data portion is restricted to ensure data consistency and integrity.

In some examples, the method may further include transferring the postprocessed data to a second table. The second table may provide both read and write access to the data for additional processing or transformation tasks.

In view of the above-described implementations of subject matter this application discloses the following list of examples, wherein one feature of an example in isolation or more than one feature of an example, taken in combination and, optionally, in combination with one or more features of one or more further examples are further examples also falling within the disclosure of this application.

Example 1 is a system comprising: at least one hardware processor; a non-transitory computer-readable medium storing instructions that, when executed by the at least one hardware processor, cause the at least one hardware processor to perform operations comprising: receiving, in a first software framework, first data from a data lake, wherein the data lake stores the first data in a raw data storage format; in response to a determination to store the first data in a first format object storage: loading the first data in an inbound buffer within a first table in the first format object storage; performing one or more postprocessing operations on the first data and other data in the first table; merging the postprocessed first data and the other data into an active data portion of the first table; and providing read access but not write access to the postprocessed first data and the other data in the first table to one or more processes of the first software framework.

In Example 2, the subject matter of Example 1 comprises, wherein the operations further comprise: transferring the postprocessed first data to a second table; and providing both read access and write access to the postprocessed first data in the second table to the one or more processes of the first software framework.

In Example 3, the subject matter of Examples 1-2 comprises, wherein the first format object storage is an open data format object storage, and wherein the first table is a delta table.

In Example 4, the subject matter of Examples 1-3 comprises, wherein the inbound buffer is implemented as a Parquet file.

In Example 5, the subject matter of Examples 1-4 comprises, wherein the performing the one or more postprocessing operations is performed periodically based on a set period.

In Example 6, the subject matter of Examples 1-5 comprises, wherein the performing the one or more postprocessing operations is performed when a maximum latency of the inbound buffer is reached.

In Example 7, the subject matter of Examples 1-6 comprises, wherein the performing the one or more postprocessing operations is performed when a maximum size of the inbound buffer is reached.

Example 8 is a method comprising: receiving, in a first software framework, first data from a data lake, wherein the data lake stores the first data in a raw data storage format; in response to a determination to store the first data in a first format object storage: loading the first data in an inbound buffer within a first table in the first format object storage; performing one or more postprocessing operations on the first data and other data in the first table; merging the postprocessed first data and the other data into an active data portion of the first table; and providing read access but not write access to the postprocessed first data and the other data in the first table to one or more processes of the first software framework.

In Example 9, the subject matter of Example 8 comprises, transferring the postprocessed first data to a second table; and providing both read access and write access to the postprocessed first data in the second table to the one or more processes of the first software framework.

In Example 10, the subject matter of Examples 8-9 comprises, wherein the first format object storage is an open data format object storage, and wherein the first table is a delta table.

In Example 11, the subject matter of Examples 8-10 comprises, wherein the inbound buffer is implemented as a Parquet file.

In Example 12, the subject matter of Examples 8-11 comprises, wherein the performing the one or more postprocessing operations is performed periodically based on a set period.

In Example 13, the subject matter of Examples 8-12 comprises, wherein the performing the one or more postprocessing operations is performed when a maximum latency of the inbound buffer is reached.

In Example 14, the subject matter of Examples 8-13 comprises, wherein the performing the one or more postprocessing operations is performed when a maximum size of the inbound buffer is reached.

Example 15 is a non-transitory machine-readable medium storing instructions which, when executed by one or more processors, cause the one or more processors to perform operations comprising: receiving, in a first software framework, first data from a data lake, wherein the data lake stores the first data in a raw data storage format; in response to a determination to store the first data in a first format object storage: loading the first data in an inbound buffer within a first table in the first format object storage; performing one or more postprocessing operations on the first data and other data in the first table; merging the postprocessed first data and the other data into an active data portion of the first table; and providing read access but not write access to the postprocessed first data and the other data in the first table to one or more processes of the first software framework.

In Example 16, the subject matter of Example 15 comprises, wherein the operations further comprise: transferring the postprocessed first data to a second table; and providing both read access and write access to the postprocessed first data in the second table to the one or more processes of the first software framework.

In Example 17, the subject matter of Examples 15-16 comprises, wherein the first format object storage is an open data format object storage, and wherein the first table is a delta table.

In Example 18, the subject matter of Examples 15-17 comprises, wherein the inbound buffer is implemented as a Parquet file.

In Example 19, the subject matter of Examples 15-18 comprises, wherein the performing the one or more postprocessing operations is performed periodically based on a set period.

In Example 20, the subject matter of Examples 15-19 comprises, wherein the performing the one or more postprocessing operations is performed when a maximum latency of the inbound buffer is reached.

Example 21 is at least one machine-readable medium comprising instructions that, when executed by processing circuitry, cause the processing circuitry to perform operations to implement of any of Examples 1-20.

Example 22 is an apparatus comprising means to implement of any of Examples 1-20.

Example 23 is a system to implement of any of Examples 1-20.

Example 24 is a method to implement of any of Examples 1-20.

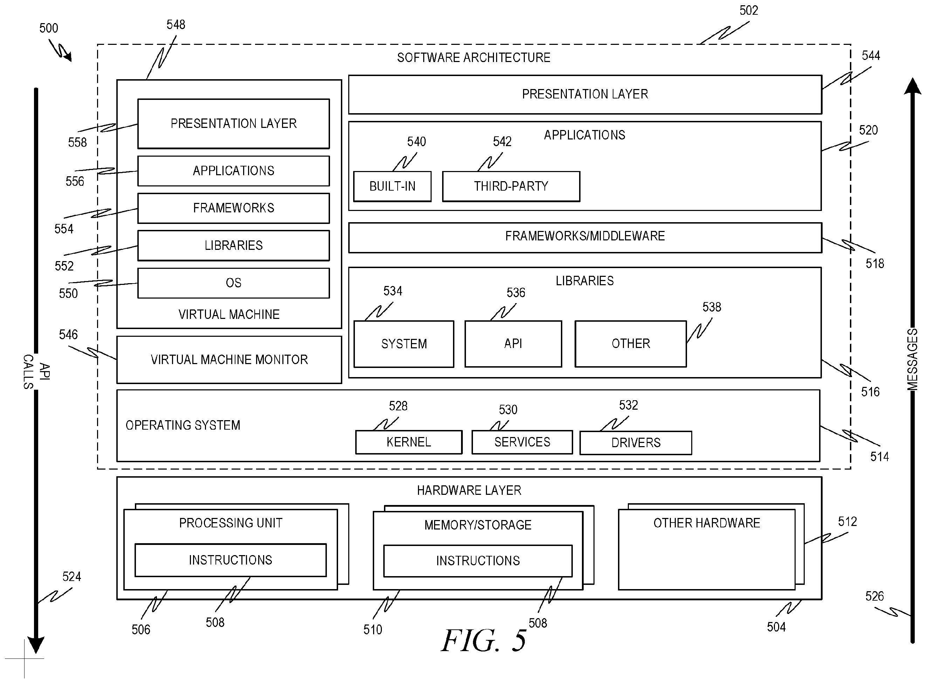

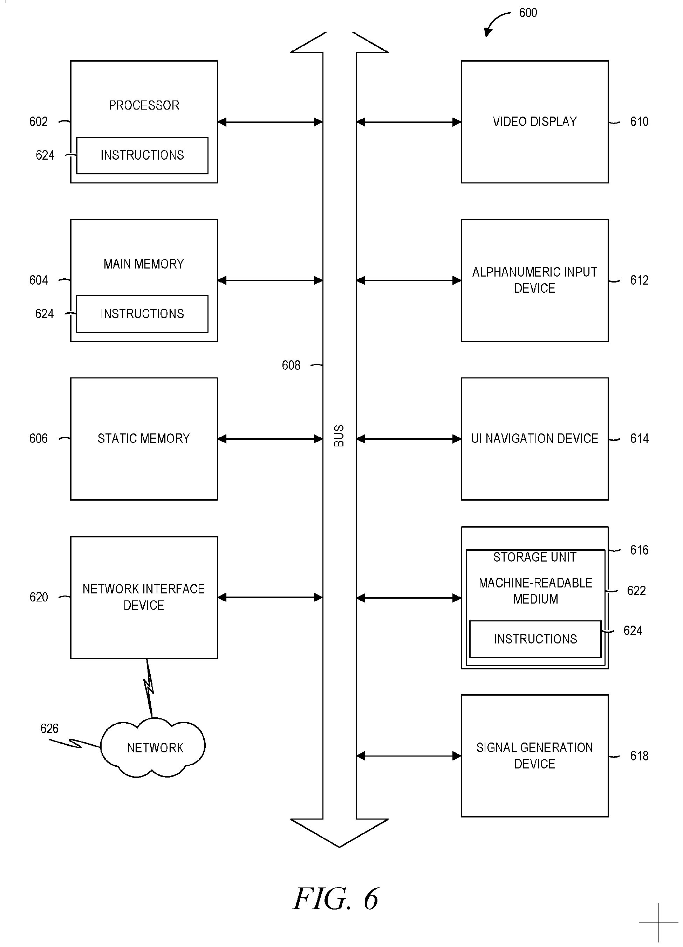

Figure 5 shows a block diagram 500 showing one example of a software architecture 502 for a computing device. The software architecture 502 may be used in conjunction with various hardware architectures, for example, as described herein. Figure 5 is merely a non-limiting example of a software architecture, and many other architectures may be implemented to facilitate the functionality described herein. A representative hardware layer 504 is illustrated and can represent, for example, any of the above referenced computing devices. In some examples, the hardware layer 504 may be implemented according to the architecture of the computer system of Figure 6.

The representative hardware layer 504 comprises one or more processing units 506 having associated executable instructions 508. Executable instructions 508 represent the executable instructions of the software architecture 502, including implementation of the methods, modules, subsystems, and components, and so forth described herein and may also include memory and/or storage modules 510, which also have executable instructions 508. Hardware layer 504 may also comprise other hardware 512 which represents any other hardware of the hardware layer 504. Examples of the other hardware 512 include the hardware components shown in Figure 6.

In the example architecture of Figure 5, the software architecture 502 may be conceptualized as a stack of layers where each layer provides particular functionality. For example, the software architecture 502 may include layers such as an operating system 514, libraries 516, frameworks/middleware 518, applications 520, and presentation layer 544. Operationally, the applications 520 and/or other components within the layers may invoke API calls 524 through the software stack and access a response, returned values, and so forth illustrated as messages 526 in response to the API calls 524. The layers illustrated are representative in nature and not all software architectures have all layers. For example, some mobile or special purpose operating systems may not provide a frameworks/middleware 518 layer, while others may provide such a layer. Other software architectures may include additional or different layers.

The operating system 514 may manage hardware resources and provide common services. The operating system 514 may include, for example, a kernel 528, services 530, and drivers 532. The kernel 528 may act as an abstraction layer between the hardware and the other software layers. For example, the kernel 528 may be responsible for memory management, processor management (e.g., scheduling), component management, networking, security settings, and so on. The services 530 may provide other common services for the other software layers. In some examples, the services 530 include an interrupt service. The interrupt service may detect the receipt of an interrupt and, in response, cause the software architecture 502 to pause its current processing and execute an interrupt service routine (ISR) when an interrupt is accessed.

The drivers 532 may be responsible for controlling or interfacing with the underlying hardware. For instance, the drivers 532 may include display drivers, camera drivers, Bluetooth^{®} drivers, flash memory drivers, serial communication drivers (e.g., Universal Serial Bus (USB) drivers), Wi-Fi^{®} drivers, NFC drivers, audio drivers, power management drivers, and so forth depending on the hardware configuration.

The libraries 516 may provide a common infrastructure that may be utilized by the applications 520 and/or other components and/or layers. The libraries 516 typically provide functionality that allows other software modules to perform tasks in an easier fashion than to interface directly with the underlying operating system 514 functionality (e.g., kernel 528, services 530 and/or drivers 532). The libraries 516 may include system libraries 534 (e.g., C standard library) that may provide functions such as memory allocation functions, string manipulation functions, mathematic functions, and the like. In addition, the libraries 516 may include API libraries 536 such as media libraries (e.g., libraries to support presentation and manipulation of various media format such as MPEG4, H.264, MP3, AAC, AMR, JPG, PNG), graphics libraries (e.g., an OpenGL framework that may be used to render two-dimensional and three-dimensional in a graphic content on a display), database libraries (e.g., SQLite that may provide various relational database functions), web libraries (e.g., WebKit that may provide web browsing functionality), and the like. The libraries 516 may also include a wide variety of other libraries 538 to provide many other APIs to the applications 520 and other software components/modules.

The frameworks/middleware 518 may provide a higher-level common infrastructure that may be utilized by the applications 520 and/or other software components/modules. For example, the frameworks/middleware 518 may provide various graphic user interface (GUI) functions, high-level resource management, high-level location services, and so forth. The frameworks/middleware 518 may provide a broad spectrum of other APIs that may be utilized by the applications 520 and/or other software components/modules, some of which may be specific to a particular operating system or platform.

The applications 520 include built-in applications 540 and/or third-party applications 542. Examples of representative built-in applications 540 may include, but are not limited to, a contacts application, a browser application, a book reader application, a location application, a media application, a messaging application, and/or a game application. Third-party applications 542 may include any of the built-in applications as well as a broad assortment of other applications. In a specific example, the third-party application 542 (e.g., an application developed using the Android^{™} or iOS^{™} software development kit (SDK) by an entity other than the vendor of the particular platform) may be mobile software running on a mobile operating system such as iOS^{™}, Android^{™}, Windows^{®} Phone, or other mobile computing device operating systems. In this example, the third-party application 542 may invoke the API calls 524 provided by the mobile operating system such as operating system 514 to facilitate functionality described herein.

The applications 520 may utilize built-in operating system functions (e.g., kernel 528, services 530 and/or drivers 532), libraries (e.g., system libraries 534, API libraries 536, and other libraries 538), and frameworks/middleware 518 to create user interfaces to interact with users of the system. Alternatively, or additionally, in some systems, interactions with a user may occur through a presentation layer, such as presentation layer 544. In these systems, the application/module "logic" can be separated from the aspects of the application/module that interact with a user.

Some software architectures utilize virtual machines. In the example of Figure 5, this is illustrated by virtual machine 548. A virtual machine creates a software environment where applications/modules can execute as if they were executing on a hardware computing device. A virtual machine is hosted by a host operating system (operating system 514) and typically, although not always, has a virtual machine monitor 546, which manages the operation of the virtual machine 548 as well as the interface with the host operating system (i.e., operating system 514). A software architecture executes within the virtual machine 548 such as an operating system 550, libraries 552, frameworks/middleware 554, applications 556 and/or presentation layer 558. These layers of software architecture executing within the virtual machine 548 can be the same as corresponding layers previously described or may be different.

### MODULES, COMPONENTS AND LOGIC

A computer system may include logic, components, modules, mechanisms, or any suitable combination thereof. Modules may constitute either software modules (e.g., code embodied (1) on a non-transitory machine-readable medium or (2) in a transmission signal) or hardware-implemented modules. A hardware-implemented module is a tangible unit capable of performing certain operations and may be configured or arranged in a certain manner. One or more computer systems (e.g., a standalone, client, or server computer system) or one or more hardware processors may be configured by software (e.g., an application or application portion) as a hardware-implemented module that operates to perform certain operations as described herein.

A hardware-implemented module may be implemented mechanically or electronically. For example, a hardware-implemented module may comprise dedicated circuitry or logic that is permanently configured (e.g., as a special-purpose processor, such as a field programmable gate array (FPGA) or an application-specific integrated circuit [ASIC]) to perform certain operations. A hardware-implemented module may also comprise programmable logic or circuitry (e.g., as encompassed within a general-purpose processor or another programmable processor) that is temporarily configured by software to perform certain operations. It will be appreciated that the decision to implement a hardware-implemented module mechanically, in dedicated and permanently configured circuitry, or in temporarily configured circuitry (e.g., configured by software) may be driven by cost and time considerations.

Accordingly, the term "hardware-implemented module" should be understood to encompass a tangible entity, be that an entity that is physically constructed, permanently configured (e.g., hardwired), or temporarily or transitorily configured (e.g., programmed) to operate in a certain manner and/or to perform certain operations described herein. Hardware-implemented modules may be temporarily configured (e.g., programmed), and each of the hardware-implemented modules need not be configured or instantiated at any one instance in time. For example, where the hardware-implemented modules comprise a general-purpose processor configured using software, the general-purpose processor may be configured as respective different hardware-implemented modules at different times. Software may accordingly configure a processor, for example, to constitute a particular hardware-implemented module at one instance of time and to constitute a different hardware-implemented module at a different instance of time.

Hardware-implemented modules can provide information to, and receive information from, other hardware-implemented modules. Accordingly, the described hardware-implemented modules may be regarded as being communicatively coupled. Where multiples of such hardware-implemented modules exist contemporaneously, communications may be achieved through signal transmission (e.g., over appropriate circuits and buses that connect the hardware-implemented modules). Multiple hardware-implemented modules are configured or instantiated at different times. Communications between such hardware-implemented modules may be achieved, for example, through the storage and retrieval of information in memory structures to which the multiple hardware-implemented modules have access. For example, one hardware-implemented module may perform an operation, and store the output of that operation in a memory device to which it is communicatively coupled. A further hardware-implemented module may then, at a later time, access the memory device to retrieve and process the stored output. Hardware-implemented modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may comprise processor-implemented modules.

Similarly, the methods described herein may be at least partially processor-implemented. For example, at least some of the operations of a method may be performed by one or more processors or processor-implemented modules. The performance of certain of the operations may be distributed among the one or more processors, not only residing within a single machine, but deployed across a number of machines. The processor or processors may be located in a single location (e.g., within a home environment, an office environment, or a server farm), or the processors may be distributed across a number of locations.

The one or more processors may also operate to support performance of the relevant operations in a "cloud computing" environment or as a "software as a service" (SaaS). For example, at least some of the operations may be performed by a group of computers (as examples of machines including processors), these operations being accessible via a network (e.g., the Internet) and via one or more appropriate interfaces (e.g., APIs).

### ELECTRONIC APPARATUS AND SYSTEM

The systems and methods described herein may be implemented using digital electronic circuitry, computer hardware, firmware, software, a computer program product (e.g., a computer program tangibly embodied in an information carrier, e.g., in a machine-readable medium for execution by, or to control the operation of, data processing apparatus, e.g., a programmable processor, a computer, or multiple computers), or any suitable combination thereof.

A computer program can be written in any form of programming language, including compiled or interpreted languages, and it can be deployed in any form, including as a standalone program or as a module, subroutine, or other unit suitable for use in a computing environment. A computer program can be deployed to be executed on one computer or on multiple computers at one site or distributed across multiple sites (e.g., cloud computing) and interconnected by a communication network. In cloud computing, the server-side functionality may be distributed across multiple computers connected by a network. Load balancers are used to distribute work between the multiple computers. Thus, a cloud computing environment performing a method is a system comprising the multiple processors of the multiple computers tasked with performing the operations of the method.

Operations may be performed by one or more programmable processors executing a computer program to perform functions by operating on input data and generating output. Method operations can also be performed by, and apparatus of systems may be implemented as, special purpose logic circuitry, e.g., an FPGA or an ASIC.

The computing system can include clients and servers. A client and server are generally remote from each other and typically interact through a communication network. The relationship of client and server arises by virtue of computer programs running on the respective computers and having a client-server relationship to each other. A programmable computing system may be deployed using hardware architecture, software architecture, or both. Specifically, it will be appreciated that the choice of whether to implement certain functionality in permanently configured hardware (e.g., an ASIC), in temporarily configured hardware (e.g., a combination of software and a programmable processor), or in a combination of permanently and temporarily configured hardware may be a design choice. Below are set out example hardware (e.g., machine) and software architectures that may be deployed.

### EXAMPLE MACHINE ARCHITECTURE AND MACHINE-READABLE MEDIUM

Figure 6 shows a block diagram of a machine in the example form of a computer system 600 within which instructions 624 may be executed for causing the machine to perform any one or more of the methodologies discussed herein. The machine may operate as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a personal computer (PC), a tablet PC, a set-top box (STB), a personal digital assistant (PDA), a cellular telephone, a web appliance, a network router, switch, or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 600 includes a processor 602 (e.g., a central processing unit (CPU), a graphics processing unit (GPU), or both), a main memory 604, and a static memory 606, which communicate with each other via a bus 608. The computer system 600 may further include a video display unit 610 (e.g., a liquid crystal display (LCD) or a cathode ray tube [CRT]). The computer system 600 also includes an alphanumeric input device 612 (e.g., a keyboard or a touch-sensitive display screen), a user interface (UI) navigation (or cursor control) device 614 (e.g., a mouse), a storage unit 616, a signal generation device 618 (e.g., a speaker), and a network interface device 620.

### MACHINE-READABLE MEDIUM

The storage unit 616 includes a machine-readable medium 622 on which is stored one or more sets of data structures and instructions 624 (e.g., software) embodying or utilized by any one or more of the methodologies or functions described herein. The instructions 624 may also reside, completely or at least partially, within the main memory 604 and/or within the processor 602 during execution thereof by the computer system 600, with the main memory 604 and the processor 602 also constituting a machine-readable medium 622.

While the machine-readable medium 622 is shown in Figure 6 to be a single medium, the term "machine-readable medium" may include a single medium or multiple media (e.g., a centralized or distributed database, and/or associated caches and servers) that store the one or more instructions 624 or data structures. The term "machine-readable medium" shall also be taken to include any tangible medium that is capable of storing, encoding, or carrying instructions 624 for execution by the machine and that cause the machine to perform any one or more of the methodologies of the present disclosure, or that is capable of storing, encoding, or carrying data structures utilized by or associated with the instructions 624. The term "machine-readable medium" shall accordingly be taken to include, but not be limited to, solid-state memories, and optical and magnetic media. Specific examples of machine-readable media include non-volatile memory, including by way of example semiconductor memory devices, e.g., erasable programmable read-only memory (EPROM), electrically erasable programmable read-only memory (EEPROM), and flash memory devices; magnetic disks such as internal hard disks and removable disks; magneto-optical disks; and compact disc read-only memory (CD-ROM) and digital versatile disc read-only memory (DVD-ROM ) disks. A machine-readable medium is not a transmission medium.

### TRANSMISSION MEDIUM

The instructions 624 may further be transmitted or received over a communications network 626 using a transmission medium. The instructions 624 may be transmitted using the network interface device 620 and any one of a number of well-known transfer protocols (e.g., hypertext transport protocol [HTTP]). Examples of communication networks include a local area network (LAN), a wide area network (WAN), the Internet, mobile telephone networks, plain old telephone (POTS) networks, and wireless data networks (e.g., WiFi and WiMax networks). The term "transmission medium" shall be taken to include any intangible medium that is capable of storing, encoding, or carrying instructions 624 for execution by the machine, and includes digital or analog communications signals or other intangible media to facilitate communication of such software.

Although specific examples are described herein, it will be evident that various modifications and changes may be made to these examples without departing from the broader spirit and scope of the disclosure. Accordingly, the specification and drawings are to be regarded in an illustrative rather than a restrictive sense. The accompanying drawings that form a part hereof show by way of illustration, and not of limitation, specific examples in which the subject matter may be practiced. The examples illustrated are described in sufficient detail to enable those skilled in the art to practice the teachings disclosed herein.

Some portions of the subject matter discussed herein may be presented in terms of algorithms or symbolic representations of operations on data stored as bits or binary digital signals within a machine memory (e.g., a computer memory). Such algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or any suitable combination thereof), registers, or other machine components that receive, store, transmit, or display information. Furthermore, unless specifically stated otherwise, the terms "a" and "an" are herein used, as is common in patent documents, to include one or more than one instance. Finally, as used herein, the conjunction "or" refers to a non-exclusive "or," unless specifically stated otherwise.

## Claims

1. A system comprising:
at least one hardware processor;
a non-transitory computer-readable medium storing instructions that, when executed by the at least one hardware processor, cause the at least one hardware processor to perform operations comprising:
receiving, in a first software framework, first data from a data lake, wherein the data lake stores the first data in a raw data storage format;
in response to a determination to store the first data in a first format object storage:
loading the first data in an inbound buffer within a first table in the first format object storage;
performing one or more postprocessing operations on the first data and other data in the first table;
merging the postprocessed first data and the other data into an active data portion of the first table; and
providing read access but not write access to the postprocessed first data and the other data in the first table to one or more processes of the first software framework.

2. The system of claim 1, wherein the operations further comprise:
transferring the postprocessed first data to a second table; and
providing both read access and write access to the postprocessed first data in the second table to the one or more processes of the first software framework.

3. The system of claim 1 or 2, wherein the first format object storage is an open data format object storage, and wherein the first table is a delta table.

4. The system of any one of the preceding claims, wherein the inbound buffer is implemented as a Parquet file.

5. The system of any one of the preceding claims, wherein the performing the one or more postprocessing operations is performed
periodically based on a set period, and/or
when a maximum latency of the inbound buffer is reached, and/or
when a maximum size of the inbound buffer is reached.

6. A method comprising:
receiving, in a first software framework, first data from a data lake, wherein the data lake stores the first data in a raw data storage format;
in response to a determination to store the first data in a first format object storage:
loading the first data in an inbound buffer within a first table in the first format object storage;
performing one or more postprocessing operations on the first data and other data in the first table;
merging the postprocessed first data and the other data into an active data portion of the first table; and
providing read access but not write access to the postprocessed first data and the other data in the first table to one or more processes of the first software framework.

7. The method of claim 6, wherein
the method further comprises:
transferring the postprocessed first data to a second table; and
providing both read access and write access to the postprocessed first data in the second table to the one or more processes of the first software framework,
and/or
the first format object storage is an open data format object storage, and wherein the first table is a delta table.

8. The method of claim 6 or 7, wherein the inbound buffer is implemented as a Parquet file.

9. The method of any one of claims 6 to 8, wherein the performing the one or more postprocessing operations is performed
periodically based on a set period, and/or
when a maximum latency of the inbound buffer is reached.

10. The method of any one of claims 6 to 9, wherein the performing the one or more postprocessing operations is performed when a maximum size of the inbound buffer is reached.

11. A non-transitory machine-readable medium storing instructions which, when executed by one or more processors, cause the one or more processors to perform operations comprising:
receiving, in a first software framework, first data from a data lake, wherein the data lake stores the first data in a raw data storage format;
in response to a determination to store the first data in a first format object storage:
loading the first data in an inbound buffer within a first table in the first format object storage;
performing one or more postprocessing operations on the first data and other data in the first table;
merging the postprocessed first data and the other data into an active data portion of the first table; and
providing read access but not write access to the postprocessed first data and the other data in the first table to one or more processes of the first software framework.

12. The non-transitory machine-readable medium of claim 11, wherein
the operations further comprise:
transferring the postprocessed first data to a second table; and
providing both read access and write access to the postprocessed first data in the second table to the one or more processes of the first software framework,
and/or
the first format object storage is an open data format object storage, and wherein the first table is a delta table.

13. The non-transitory machine-readable medium of claim 11 or 12, wherein the inbound buffer is implemented as a Parquet file.

14. The non-transitory machine-readable medium of any one of claims 11 to 13, wherein the performing the one or more postprocessing operations is performed periodically based on a set period.

15. The non-transitory machine-readable medium of any one of claims 11 to 14, wherein the performing the one or more postprocessing operations is performed when a maximum latency of the inbound buffer is reached.
